(19) **Europäisches Patentamt**
**European Patent Office**
**Office européen des brevets**

(11) **EP 4 099 200 B1**

(12) **FASCICULE DE BREVET EUROPEEN**

(45) Date de publication et mention
de la délivrance du brevet:
**08.04.2026 Bulletin 2026/15**

(21) Numéro de dépôt: **22176838.5**

(22) Date de dépôt: **01.06.2022**

(51) Classification Internationale des Brevets (IPC):
**G06F 21/32** *(2013.01)* **H04L 9/40** *(2022.01)*
**G06V 40/12** *(2022.01)* **G06V 40/40** *(2022.01)*
**G06V 10/46** *(2022.01)* **G06V 10/82** *(2022.01)*
**G06V 10/74** *(2022.01)* **G06V 40/16** *(2022.01)*
**G06V 40/18** *(2022.01)*

(52) Classification Coopérative des Brevets (CPC):
**G06F 21/32; G06V 10/46; G06V 10/761;
G06V 10/82; G06V 40/1353; G06V 40/1371;
G06V 40/1388; G06V 40/171; G06V 40/172;
G06V 40/193; G06V 40/197; G06V 40/40;
H04L 63/0861**

(54) **PROCEDE ET DISPOSITIF D'IDENTIFICATION ET/OU D'AUTHENTIFICATION BIOMETRIQUE**

VERFAHREN UND VORRICHTUNG ZUR BIOMETRISCHEN IDENTIFIZIERUNG UND/ODER
AUTHENTIFIZIERUNG

METHOD AND DEVICE FOR BIOMETRIC IDENTIFICATION AND/OR AUTHENTICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.06.2021 FR 2105798**

(43) Date de publication de la demande:
**07.12.2022 Bulletin 2022/49**

(73) Titulaire: **IDEMIA Public Security France
92400 Courbevoie (FR)**

(72) Inventeurs:
• **FOURRE, Joël-Yann**
**92400 COURBEVOIE (FR)**
• **THIEBOT, Alain**
**92400 COURBEVOIE (FR)**
• **BEAUDET, Jean**
**92400 COURBEVOIE (FR)**

(74) Mandataire: **IPS
2, place Samuel de Champlain
92400 Courbevoie (FR)**

(56) Documents cités:
**EP-A1- 3 287 943 US-A1- 2016 070 967
US-A1- 2019 251 380**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE

La présente invention se rapporte au domaine de la détection de fraude dans le domaine de l'identification/authentification par biométrie. Au moins un mode de réalisation concerne un procédé d'identification et/ou d'authentification biométrique, ainsi qu'un dispositif mettant en œuvre un tel procédé.

ETAT DE LA TECHNIQUE ANTERIEURE

L'identification d'une personne par la reconnaissance biométrique d'un visage, d'une empreinte digitale ou palmaire, d'un iris de l'œil, permet de sécuriser des accès à des bâtiments ou à des machines. Une telle technologie permet de s'affranchir de codes d'accès ou de cartes qui peuvent être prêtés, volés ou falsifiés. Utiliser cette technologie permet de renforcer la sécurité dans la mesure où la probabilité que deux personnes aient par exemple des empreintes digitales identiques est quasiment nulle.

Dans le cas d'une identification, des données biométriques extraites d'une image d'une partie corporelle (e.g. des éléments locaux tels que des minuties dans le cas d'une empreinte digitale) sont comparées avec un ensemble de données biométriques de référence contenues dans une base de données afin de retrouver l'identité d'une personne parmi plusieurs autres personnes. Dans le cas d'une authentification, ces données biométriques extraites sont comparées à des données biométriques d'une seule et même personne afin de vérifier que la personne qui se présente est bien celle qu'elle prétend être. La comparaison permet de déterminer si l'image capturée appartient ou non à une personne référencée dans la base de données ou si la personne est bien celle qu'elle prétend être.

Certains individus mal intentionnés tentent de se faire identifier (respectivement authentifier) frauduleusement en utilisant des leurres afin d'induire en erreur des dispositifs d'identification (respectivement d'authentification). Avec l'arrivée des imprimantes 3D, il est, en effet, possible de créer de faux doigts ou des masques dans différents matériaux, e.g. plastique, résine, etc. L'application de peinture et/ou de maquillage permet ensuite de produire un masque presque identique à un visage réel. Dès lors, il est connu de valider le fait que la partie corporelle présente devant un dispositif de capture est véritable. Une partie corporelle est considérée comme véritable si elle est réellement la partie corporelle qu'elle prétend être et non un leurre.

Il s'agit donc ici de valider la véracité de la partie corporelle capturée dont l'image servira à l'identification biométrique.

Certains procédés de validation connus reposent entièrement sur une analyse d'images notamment par identification des artefacts de réalisation de fraudes. Ces procédés ne sont cependant pas robustes face à des fraudes soignées.

D'autres procédés de validation sont connus pour capturer une série d'images de la partie corporelle et pour mesurer des paramètres physiques tels que, par exemple, la sudation, le pouls, l'oxymétrie, le blanchiment au cours de l'appui d'un doigt sur une surface de capture. Les procédés comparent les paramètres physiques ainsi mesurés sur la partie corporelle à des seuils afin de prendre une décision sur la nature frauduleuse de l'identification/authentification. De tels seuils de décision sont difficiles à régler. En effet, des dégradations (e.g. dégradation superficielle de l'épiderme) peuvent diminuer les performances des procédés en question. Ainsi, les seuils doivent être réglés de telle sorte à valider une identification/authentification dans le cas où la partie corporelle véritable présente une dégradation (e.g. saleté, hématome, etc). Or, des seuils fixés pour valider l'identification dans de telles situations ont aussi tendance à valider des acquisitions mêlant une partie corporelle véritable et une partie corporelle frauduleuse ce qui réduit la sécurité globale du système. Au contraire si les seuils sont réglés pour invalider les acquisitions mêlant une partie corporelle véritable et une partie corporelle frauduleuse, ils risquent d'invalider également l'identification/authentification dans le cas où la partie corporelle véritable présente une dégradation.

Il est souhaitable de pallier ces différents inconvénients de l'état de la technique. Il est notamment souhaitable de proposer un procédé d'identification/authentification qui soit robuste aux tentatives de fraudes tout en permettant l'identification/authentification dans le cas de dégradations présentes sur des parties corporelles considérées comme véritables.

US 2019/0251380 A1 porte sur un dispositif de vérification du caractère vivant qui acquiert une première image et une seconde image, et sélectionne un ou plusieurs modèles de caractère vivant basés sur des analyses respectives de la première image et de la seconde image, y compris des analyses basées sur une partie d'objet détectée dans la première image et/ou la seconde image. Le dispositif vient vérifier, en utilisant le ou les modèles de caractère vivant sélectionnés, le caractère vivant de l'objet. La première image peut être une image couleur et la seconde une image infrarouge.

EP 3 287 943 A1 décrit une méthode qui comprend l'extraction d'une zone d'intérêt d'un objet à partir d'une partie de l'objet dans une image d'entrée et l'exécution d'un test du caractère vivant de l'objet à l'aide d'un modèle basé sur un réseau neuronal. Le modèle exploite des d'informations de texture extraites des informations de la zone d'intérêt.

US 2016/070967 A1 décrit une méthode permettant de déterminer si un objet biométrique fait partie d'un individu vivant. Des informations d'image sont acquises à partir de l'objet biométrique à l'aide d'un capteur, tel qu'un capteur à ultrasons. Les informations d'image peuvent être analysées au cours d'au moins deux étapes d'analyse. L'une des étapes d'analyse peut être une étape d'analyse temporelle qui analyse les changements dans les informations d'image obtenues pendant une période de temps au cours de laquelle l'objet biométrique était continuellement accessible au capteur. D'autres étapes peuvent se concentrer sur des aspects d'un ensemble particulier d'informations d'image, plutôt que de chercher à évaluer les changements au fil du temps. Ces autres étapes visent à déterminer si un ensemble d'informations d'image présente des caractéristiques similaires à celles d'un objet biométrique vivant.

EXPOSE DE L'INVENTION

Au moins un mode de réalisation concerne un procédé d'identification ou d'authentification biométrique telle que définie par l'une ou l'autre des revendications 1 et 2.

Le procédé décrit permet avantageusement une identification/authentification d'un individu même dans le cas où celui-ci présente une partie corporelle avec des dégradations, cette identification/authentification étant par ailleurs robuste face aux tentatives de fraudes, notamment celles qui mêlent une partie corporelle véritable et un leurre.

Dans un mode de réalisation, vérifier ladite correspondance en utilisant ladite carte de véracité comprend :

- calculer un quatrième score de correspondance entre ladite image d'une zone corporelle et ledit groupe de données biométriques de référence en ne tenant compte que des données qui appartiennent à des zones de l'image d'une zone corporelle considérées comme véritables dans la carte de véracité ; et
- déterminer si ladite image d'une zone corporelle et ledit groupe de données biométriques de référence correspondent en fonction de la valeur dudit quatrième score de correspondance relativement à une quatrième valeur de seuil.

Dans un mode de réalisation, vérifier ladite correspondance en utilisant ladite carte de véracité comprend :

- calculer un cinquième score de correspondance entre ladite image d'une zone corporelle et ledit groupe de données biométriques de référence en ne tenant compte que des données qui appartiennent à des zones de l'image d'une zone corporelle considérées comme véritables dans la carte de véracité ;
- calculer un sixième score de correspondance entre ladite image d'une zone corporelle et ledit groupe de données biométriques de référence en ne tenant compte que des données qui appartiennent à des zones de l'image d'une zone corporelle considérées comme non véritables dans la carte de véracité ;
- déterminer que ladite image d'une zone corporelle et ledit groupe de données biométriques de référence correspondent dans le cas où la valeur absolue de la différence entre ledit cinquième score et ledit sixième score est inférieure à une cinquième valeur de seuil.

Dans un mode de réalisation, vérifier ladite correspondance en utilisant ladite carte de véracité comprend :

- calculer un septième score de correspondance entre ladite image d'une zone corporelle et ledit groupe de données biométriques de référence en pondérant les données avec la valeur qui leur est associée dans la carte de véracité ;
- déterminer si ladite image d'une zone corporelle et ledit groupe de données biométriques de référence correspondent en fonction de la valeur dudit septième score de correspondance relativement à une sixième valeur de seuil.

Dans un mode de réalisation, comparer ladite image d'une zone corporelle avec un groupe de données biométriques de référence en utilisant ladite carte de véracité comprend une mise en correspondance d'éléments locaux et dans lequel vérifier ladite correspondance en utilisant ladite carte de véracité comprend :

- déterminer un nombre d'éléments locaux mis en correspondance et considérés comme véritables dans la carte de véracité ; et
- déterminer que ladite image d'une zone corporelle et ledit groupe de données biométriques de référence correspondent dans le cas où ledit nombre est supérieur à une huitième valeur de seuil.

Au moins un mode de réalisation concerne un dispositif d'identification ou d'authentification biométrique comprenant au moins un processeur configuré pour mettre en œuvre le procédé selon l'invention.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La figure 1 illustre une empreinte digitale partiellement recouverte d'un leurre ;

La figure 2 illustre un procédé de validation d'identification ou d'authentification selon un mode particulier de réalisation ;

La figure 3 illustre en détail une étape d'obtention d'une carte de véracité selon un mode de réalisation particulier, dans le cas où la partie corporelle est une empreinte digitale ;

La figure 4 illustre en détail une étape de comparaison d'une image d'une zone corporelle avec au moins un groupe de données biométriques de référence selon un premier mode de réalisation particulier ;

La figure 5 illustre en détail une étape de comparaison d'une image d'une zone corporelle avec au moins un groupe de données biométriques de référence selon un deuxième mode de réalisation particulier ;

La figure 6 illustre en détail une étape de comparaison d'une image d'une zone corporelle avec au moins un groupe de données biométriques de référence selon un troisième mode de réalisation particulier ; et,

La figure 7 illustre schématiquement un exemple d'architecture matérielle d'un dispositif d'identification ou d'authentification selon un mode particulier de réalisation.

## EXPOSE DETAILLE DE MODES DE REALISATION

Dans les modes de réalisation décrits, seul le terme identification est utilisé. Toutefois, les modes de réalisation décrits s'appliquent de manière identique à une authentification. Ainsi, les données biométriques de référence peuvent être stockées dans une base de données dans le cas d'une identification ou bien reproduites sur un document officiel (e.g. un passeport) dans le cas d'une authentification. Classiquement, les données biométriques de référence stockées dans la base de données ont été, au préalable, extraites d'images de parties corporelles de référence, chacune appartenant à un individu particulier. Il s'agit le plus souvent d'éléments locaux tels que des minuties sur une empreinte digitale. Stocker les données biométriques de référence au lieu des images de référence est moins coûteux, l'extraction des données biométriques de référence étant effectuée une fois pour toutes. En outre, ces données biométriques de référence nécessitent moins de place mémoire pour leur stockage que les images de référence desquelles elles ont été extraites. Dans la suite, on définit un groupe de données biométriques de référence comme étant l'ensemble des données biométriques extraites d'une image d'une partie corporelle appartenant à un individu donné. Ainsi, la base de données comprend une pluralité de groupes de données biométriques (e.g. de minuties), chaque groupe de données biométriques étant associé à un individu particulier. Un groupe de données biométriques comprend au moins une donnée biométrique.

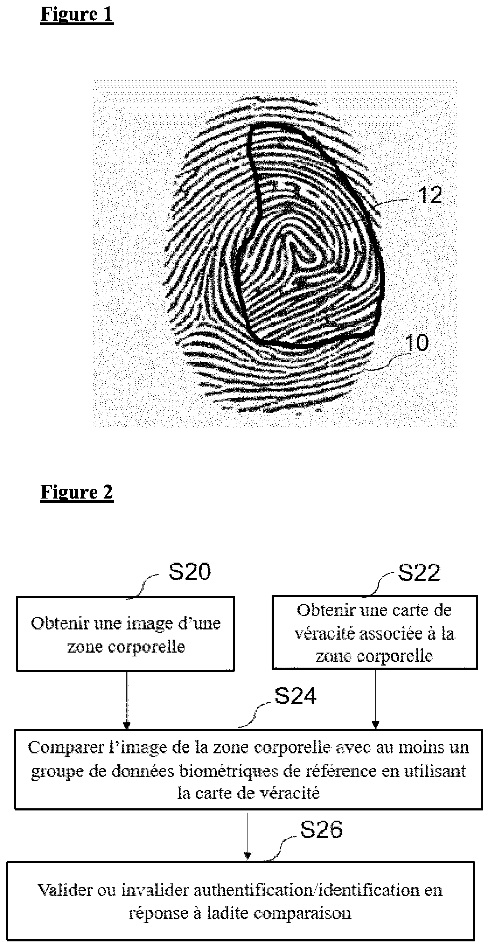

La Fig. 1 illustre une empreinte digitale 10 partiellement recouverte d'un leurre 12. Le leurre 12 a pour objectif de tromper les dispositifs d'identification. Le leurre 12 est par exemple un film mince reproduisant une empreinte digitale stockée dans une base de données ou sur un document officiel. La partie d'empreinte digitale correspondant à un véritable doigt 10 si elle ne reproduit pas une empreinte digitale connue de la base de données a pour objectif de tromper les dispositifs de validation de véracité des parties corporelles.

L'identification et sa validation étant deux étapes classiquement appliquées de manière séquentielle, l'empreinte digitale de la Fig.1 permet une identification grâce au leurre, ladite identification étant validée grâce à la partie correspondant à un véritable doigt. Le même procédé peut s'appliquer à d'autres parties corporelles comme un véritable visage qui serait partiellement recouvert d'un masque reproduisant un autre visage dont a été extrait un groupe de données biométriques de référence qui est stocké dans une base de données en vue d'une identification. Ainsi, une identification est possible grâce au masque, ladite identification étant validée grâce à la partie correspondant au véritable visage.

La Fig. 2 illustre un procédé d'identification ou d'authentification biométrique selon un mode particulier de réalisation.

Lors d'une étape S20, une image d'une zone corporelle est obtenue. Cette image peut être acquise directement par une caméra ou bien par un capteur spécifique d'une biométrie, comme un capteur d'empreinte avec ou sans contact. L'image de la zone corporelle peut également être obtenue indirectement, par exemple à partir de données acquises grâce à un capteur OCT (« *Optical Coherence Tomography* ») ou échographique. L'OCT est un capteur optique sans contact utilisant une technique interférométrique, qui permet d'imager en 3 dimensions les éléments diffusant la lumière. Dans la suite du document, les différents modes de réalisation sont décrits pour une image 2D d'une zone corporelle. Toutefois, les différents modes de réalisation s'appliquent également à une image tridimensionnelle ou à la combinaison d'une image de texture et d'une image tridimensionnelle. Par exemple, une carte de distance (z-map) peut être utilisée à la place de l'image de la zone corporelle. Une carte de distance est une image dans laquelle la valeur de chaque pixel représente la distance de celui-ci par rapport à la caméra.

Lors d'une étape S22, une carte de véracité associée à la zone corporelle est obtenue. La carte de véracité associe ainsi à chaque portion d'une pluralité de portions de l'image de la zone corporelle une valeur représentative du caractère véritable de ladite portion. Une portion peut être un pixel ou un groupe de pixels. Dans un mode particulier de réalisation, la carte de véracité associe à chaque pixel de l'image de la zone corporelle une valeur représentative du caractère véritable dudit pixel.

La carte de véracité peut être binaire, auquel cas la valeur associée vaut une première valeur (e.g. 0) si la portion est considérée comme appartenant à une partie corporelle véritable, et une seconde valeur (e.g. 1) si la portion est considérée comme appartenant à un leurre, à une imitation. Dans une autre variante, la carte de véracité est ternaire, i.e. la valeur associée vaut une première valeur (e.g. 0) si la portion est considérée comme appartenant à une partie corporelle véritable, une seconde valeur (e.g. 1) si la portion est considérée comme appartenant à un leurre/à une imitation et une troisième valeur (e.g. 2) dans le cas où il y a une incertitude sur le caractère de ladite portion. Dans une autre variante, la carte de véracité associe à chaque portion une valeur représentative d'une probabilité que la portion appartienne à une partie corporelle véritable et non à un leurre.

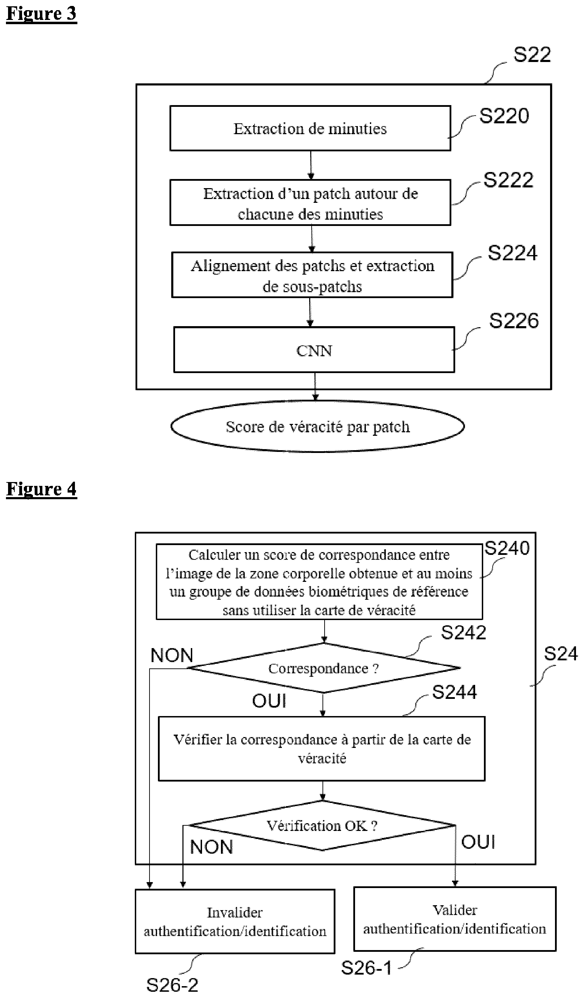

La Fig. 3 illustre en détail l'étape S22 du procédé de validation selon un mode de réalisation particulier, dans le cas où la partie corporelle est une empreinte digitale. La carte de véracité est par exemple obtenue en appliquant le procédé décrit dans le document de Chugh et al. intitulé « Fingerprint spoof buster : Use of minutiae-centered patches » publié en 2018 dans IEEE Transaction on information Forensics and security. Le procédé proposé utilise un réseau de neurones de type CNN (acronyme anglais de « Convolutional Neural Network ») connu sous le nom de MobileNet. L'empreinte digitale est introduite à l'entrée du réseau de neurones préalablement entraîné, i.e. dont les poids sont connus, afin d'obtenir un score par patch centré autour d'une minutie, ledit score étant représentatif de la probabilité que ledit patch appartienne à un véritable doigt. Une minutie est un point particulier qui se situe sur le changement de continuité des lignes papillaires (e.g. une bifurcation, une terminaison de ligne) d'une empreinte digitale.

Lors d'une étape S220, k minuties sont extraites de l'empreinte digitale, chaque minutie étant représentée par un ensemble de paramètres (e.g. cordonnées spatiales, orientation, etc), k étant un entier positif. L'extraction de minuties comprend généralement le filtrage de l'image (e.g. rehaussement de contraste, réduction de bruit) pour faire ressortir la plus grande partie d'information utile, la squelettisation de l'image filtrée afin d'obtenir une image en noir et blanc de laquelle sont extraites les minuties.

Lors d'une étape S222, k patch locaux sont extraits, chacun des patchs étant un bloc de pixels (e.g. de 136 x 136 pixels) centré sur une des k minuties.

Lors d'une étape S224, chaque patch est aligné par rotation en fonction de l'orientation associée à la minutie sur laquelle il est centré. Après l'alignement, un patch plus petit (e.g. de taille 96x96 pixels) appelé sous-patch est extrait du patch aligné.

Lors d'une étape S226, les k patchs extraits sont fournis à l'entrée du réseau de neurones entraîné afin d'obtenir un score de véracité pour chaque patch. La carte de véracité associe par exemple à chaque pixel du patch la valeur du score du patch.

Dans le cas où la partie corporelle est un visage, la carte de véracité est par exemple obtenue en appliquant le procédé décrit dans la demande de brevet WO2014/198847.

La surface du visage est éclairée de sorte à générer des tavelures sur ladite surface. A cet effet, la surface est éclairée par un flux incident cohérent et polarisé selon une direction de polarisation de cohérence supérieure ou égale à 1cm. Une image des tavelures est alors obtenue par capture d'un flux réfléchi sur la surface et diffusé par la surface. La valeur d'au moins un critère représentatif (e.g. écart-type des intensités) des tavelures est calculée à partir de l'image obtenue. La valeur ainsi calculée est comparée à un intervalle de valeurs de référence admissibles pour un véritable visage. Si la valeur calculée appartient audit intervalle, alors le visage est considéré comme étant un véritable visage, sinon le visage est considéré comme étant un leurre. Par exemple, si l'écart-type des intensités de l'image est en dehors de l'intervalle attendu, alors le visage n'est pas considéré comme un véritable visage.

Afin d'obtenir des valeurs locales pour la carte de véracité, l'image est divisée en blocs de pixels et une valeur d'au moins un critère représentatif est calculée par bloc de pixels. Ainsi, une décision peut être prise pour chaque bloc, indiquant si ledit bloc appartient ou non à un véritable visage. Dans ce cas la carte de véracité est binaire.

Alternativement, pour chaque pixel de l'image, un voisinage de ce pixel est considéré pour calculer la valeur du critère associé à ce pixel.

Dans une variante de réalisation, la carte de véracité est par exemple obtenue en appliquant le procédé décrit dans le document de Deb et al intitulé « Look Locally Infer Globally: A Generalizable Face Anti-Spoofing Approach » publié en 2020 dans IEEE Transactions on Information Forensics and Security, 16, 1143-1157. Ce procédé permet d'obtenir des cartes de véracité construites par un réseau de neurones convolutionnel à partir des images de visages.

Dans le cas où la partie corporelle est un iris, la carte de véracité est par exemple obtenue à partir d'une image de l'iris capturée dans le spectre visible et une image de l'iris capturée dans le spectre infra-rouge en appliquant le procédé décrit dans la demande de brevet FR3053500. Afin d'obtenir des valeurs locales pour la carte de véracité, l'image est divisée en blocs de pixels et une valeur est calculée par bloc. Ainsi, une décision peut être prise pour chaque bloc, indiquant si ledit bloc appartient ou non à un véritable iris. Alternativement, pour chaque pixel de l'image, un voisinage de ce pixel est considéré pour calculer la valeur du critère associé à ce pixel. Dans ce cas la carte de véracité est binaire.

De nouveau en référence à la Fig. 2, lors d'une étape S24, l'image de la zone corporelle obtenue à l'étape S20 est comparée à au moins un groupe de données biométriques de référence courant en tenant compte de la carte de véracité obtenue à l'étape S22. Les données biométriques de référence sont par exemple stockées dans une base de données ou reproduite sur un document officiel (e.g. un passeport). La comparaison permet de déterminer si l'image obtenue à l'étape S20 appartient ou non à une personne référencée dans la base de données (identification) ou si la personne est bien celle qu'elle prétend être (authentification). La comparaison comprend généralement le calcul d'un score représentatif de la correspondance entre des données biométriques extraites de l'image de la zone corporelle obtenue à l'étape S20 et des données biométriques de référence et la comparaison de ce score à une valeur de seuil. Le calcul d'un score représentatif de la correspondance comprend par exemple une mise en correspondance d'éléments locaux dans les images (e.g. comme des minuties dans le cas d'images d'empreinte digitale). Si l'image de la zone corporelle obtenue à l'étape S20 correspond au groupe de données biométriques de référence courant (e.g. le score calculé est supérieur à un seuil) alors, lors d'une étape S26, l'identification est validée sinon elle est invalidée. Dans ce dernier cas, une alarme peut être déclenchée (e.g. émission d'un signal visuel ou sonore) pour indiquer une tentative de fraude.

Dans le cas d'une base de données avec une pluralité de groupes de données biométriques, chaque groupe correspondant à un individu particulier, si l'image de la zone corporelle obtenue à l'étape S20 ne correspond pas au groupe de données biométriques de référence courant, l'étape S24 est répétée avec un nouveau groupe de données biométriques de référence qui appartient à un autre individu soit jusqu'à ce que tous les groupes de données biométriques de référence aient été comparés à l'image de la zone corporelle obtenue à l'étape S20 ou jusqu'à trouver un groupe de données biométriques de référence, et donc un individu, qui corresponde à l'image de la zone corporelle obtenue à l'étape S20.

La Fig. 4 illustre en détail l'étape S24 du procédé de validation selon un mode de réalisation particulier.

Lors d'une étape S240, un score de correspondance S1 entre l'image de la zone corporelle obtenue à l'étape S20 et au moins un groupe de données biométriques de référence courant est calculé sans utiliser l'image de véracité. Ce calcul du score comprend par exemple une mise en correspondance d'éléments locaux dans les images (e.g. comme des minuties dans le cas d'images d'empreinte digitale) et le calcul d'un score représentatif de la correspondance, e.g. de la ressemblance, entre ces éléments locaux. Dans la suite ce score est appelé score de correspondance. De ce score de correspondance, on déduit si l'image de la zone corporelle obtenue à l'étape S20 correspond ou non au groupe de données biométriques de référence courant.

Ainsi, lors d'une étape S242, le procédé détermine si ladite image d'une zone corporelle et le groupe de données biométriques de référence courant correspondent en fonction de la valeur dudit score de correspondance relativement à une valeur de seuil.

Les étapes S240 et S242 dépendent de la partie corporelle considérée.

Ce mode d'implémentation permet d'effectuer le calcul du score de correspondance S1 avec un algorithme de comparaison biométrique de l'art antérieur, qui ne prend pas en compte la carte de véracité, et permet ainsi d'utiliser un système préexistant pour réaliser les étapes S240 et S242. Ceci est particulièrement avantageux pour les systèmes comprenant de nombreux groupes de données biométriques de référence, ces derniers utilisant des algorithmes de comparaison biométrique adaptés.

Dans le cas particulier d'une empreinte digitale, le calcul d'un score de correspondance comprend la mise en correspondance de points particuliers, e.g. les minuties. Chaque minutie est représentée par un ensemble de paramètres (e.g. cordonnées, orientation, etc). Par exemple, avec 15 à 20 minuties correctement localisées, il est possible d'identifier une empreinte digitale parmi plusieurs millions d'exemplaires. Dans une variante de réalisation, d'autres informations sont utilisées en plus ou à la place des minuties comme par exemple un motif général de l'empreinte ou des informations plus complexes telles que la forme des crêtes des lignes papillaires. L'extraction des minuties avec leurs paramètres comprend généralement le filtrage de l'image (e.g. rehaussement de contraste, réduction de bruit) pour faire ressortir la plus grande partie d'information utile, la squelettisation de l'image filtrée afin d'obtenir une image en noir et blanc de laquelle sont extraites les minuties. Afin de déterminer si l'empreinte digitale obtenue à l'étape S20 appartient à une personne P dont un groupe de minuties de référence est stocké dans une base de données, on procède à la comparaison des minuties associées à l'empreinte digitale obtenue à l'étape S20 avec le groupe de minuties de référence stocké dans la base de données. Les minuties associées à une empreinte digitale définissent un nuage de points. Ainsi, une comparaison entre deux empreintes digitales est essentiellement une comparaison entre deux nuages de points. Un score de correspondance est une note estimant à quel point ces deux nuages de points se superposent. Si les deux nuages de points sont semblables, alors le score est élevé, i.e. supérieur à un seuil TH1, sinon le score est faible. Si le score est élevé, alors les empreintes digitales sont semblables, i.e. qu'elles correspondent, et on peut en conclure que les empreintes digitales appartiennent au même individu P.

Alternativement aux minuties, d'autres points caractéristiques peuvent être utilisés. Le document FR3037422 propose d'utiliser des points d'intérêt associés à des descripteurs locaux. Les points d'intérêt peuvent être des extrema locaux de l'image et les descripteurs peuvent être choisis parmi les suivants : SIFT, SURF, Orb, Kaze, Aka-ze, Brisk, etc. La comparaison de deux images consiste à mettre en relation un groupe de points d'intérêt extraits de l'image obtenue à l'étape S20 avec un groupe de points d'intérêt de référence tels que les descripteurs se correspondent deux à deux et que des contraintes géométriques sur la position des points soient respectées. Comme avec les minuties, la comparaison consiste à mettre en correspondance des nuages de points. L'invention s'applique donc de manière identique.

Dans le cas particulier d'un visage, le calcul d'un score de correspondance comprend la détermination de vecteurs de descripteurs. Ainsi, des descripteurs sont extraits de l'image du visage obtenue à l'étape S20 sous la forme d'un vecteur. La reconnaissance faciale peut s'effectuer en deux dimensions lorsqu'elle utilise la forme et les mesures des éléments du visage (yeux, nez etc.), ou en trois dimensions lorsque plusieurs angles du visage sont utilisés (face, profil, trois quarts...) pour composer le modèle à partir de photos ou d'un enregistrement vidéo. Dans d'autres modes de réalisation, une analyse en composantes principales permet d'extraire d'une image de visage un tel vecteur de descripteurs. Dans une variante de réalisation, le visage dans l'image obtenue à l'étape S20 est recentré et normalisé, e.g. en utilisant la position des deux yeux. L'image avec le visage recentré et normalisé est ensuite introduite en entrée d'un réseau de neurones pré-entraîné lequel fournit en sortie ledit vecteur de descripteurs.

Afin de déterminer si l'image du visage obtenue à l'étape S20 appartient à une personne dont un groupe de données biométriques est stocké dans une base de données, on procède à la comparaison du vecteur V de descripteurs associé à l'image du visage obtenue à l'étape S20 avec un vecteur de descripteurs de référence stocké dans la base de données. Un score de correspondance est une note estimant à quel point ces deux vecteurs sont semblables. Le score de correspondance est par exemple un produit scalaire des deux vecteurs (ceux-ci peuvent être normalisés avant si besoin). Si les deux vecteurs sont semblables, alors le score est élevé / proche de 1, i.e. supérieur à un seuil TH2, sinon le score est faible. Si le score est proche de 1, alors les visages sont semblables, i.e. qu'ils correspondent, et on peut en conclure que les visages appartiennent au même individu.

Dans le cas particulier d'un iris de l'œil, la comparaison comprend la mise en correspondance d'éléments locaux, en l'occurrence d'anneaux ou portions d'anneaux de l'iris. La demande de brevet FR3037422 décrit un tel procédé de mise en correspondance. Le procédé comprend les étapes suivantes :

- segmenter l'image d'un œil de sorte à isoler une région contenant la texture de l'iris et à déterminer un masque associé ;
- diviser ladite région contenant la texture d'iris et ledit masque en N2 d'anneaux concentriques,
- normaliser de ladite région contenant la texture d'iris et ledit masque de coordonnées cartésienne en coordonnées polaires ;
- déterminer un code binaire d'iris IC de taille égale à N2*P*F codant ladite région contenant la texture d'iris et un code binaire de masque IM de taille égale à N2*P*F codant le masque associé ; lesdits codes étant déterminés par application de F filtres de Gabor en chaque position parmi P positions de chaque anneau,
- mettre en correspondance, e.g. avec un algorithme de Viterbi, au moins un anneau de l'iris de l'image acquise avec un anneau d'un iris de référence de manière à minimiser une distance de correspondance DM entre l'image acquise et les données biométriques de référence, ladite distance de correspondance étant obtenue à partir de codes d'iris déterminés et de référence stockés et des codes de masque associés en calculant une somme de distances entre chacun desdits anneaux de l'iris de l'image acquise mis en correspondance et l'anneau de l'iris de référence qui lui correspond. Le score de correspondance S1 est alors égal à l'inverse de la distance de correspondance calculée ou le score de correspondance est égal à (1-DM).

Si les iris sont semblables, alors le score de correspondance est élevé, i.e. supérieur à un seuil TH3, sinon le score est faible. Si le score est élevé, alors les iris sont semblables, i.e. qu'ils correspondent, et on peut en conclure que les iris appartiennent au même individu.

De nouveau en référence à la Fig. 4, dans le cas où au moins un groupe de données biométriques de référence correspond à l'image de la zone corporelle (étape S242), alors le procédé continue à une étape S244, sinon l'identification n'est pas validée (26-2), la zone corporelle obtenue ne correspondant à aucun groupe de données biométriques de référence. Dans ce dernier cas, une alarme peut être déclenchée (e.g. émission d'un signal visuel ou sonore) pour indiquer une tentative de fraude.

Dans l'étape S244, l'identification effectuée à l'étape S242 est vérifiée. A cet effet, l'information fournie par la carte de véracité est utilisée pour valider ou invalider l'identification.

Dans un premier mode de réalisation, un nouveau score de correspondance S2 est calculé de la même manière qu'à l'étape S240 mais en ne tenant compte que des données qui appartiennent à des zones de l'image considérées comme véritables dans la carte de véracité. Comme un groupe de données biométriques de référence a déjà été identifié, cette étape supplémentaire est peu coûteuse en termes calculatoires. Dans le cas où la carte de véracité associe à chaque portion d'image une valeur représentative d'une probabilité que la portion appartienne à une partie corporelle véritable et non à un leurre, elle peut être seuillée afin d'indiquer les zones de l'image considérées comme véritables. Le seuil utilisé est choisi de sorte à prendre en compte dans le calcul du nouveau score de correspondance les zones de l'image pour lesquelles il y a une certaine incertitude (probabilité proche de 0.5). Par exemple, le seuil est égal à 0.6.

Ce nouveau score de correspondance S2 est comparé à un seuil, e.g. égal au même seuil que celui utilisé à l'étape S240 ou différent, e.g. légèrement inférieur. Par exemple, dans le cas d'une empreinte digitale, seules les minuties appartenant à des patchs considérés comme véritables sont prises en compte dans le calcul de ce nouveau score de correspondance S2. Si ce nouveau score de correspondance S2 est supérieur à une valeur de seuil TH1' alors l'identification est validée (S26-1), sinon l'identification est invalidée (S26-2). Dans ce dernier cas, une alarme (e.g. un signal visuel ou sonore) peut être déclenchée (e.g. émission d'un signal visuel ou sonore) pour indiquer une tentative de fraude. En effet, en cas de fraude comme illustré sur la Fig. 1, la partie véritable de l'empreinte ne correspond pas aux données biométriques de référence. Dans un mode de réalisation, TH1' est égal à TH1. Dans une variante, TH1' est légèrement inférieur à TH1. Par exemple, TH1'= $\alpha$*TH1 avec $\alpha$=0.95.

Dans une variante de réalisation, un nouveau score de correspondance S3 est obtenu de la même manière que le score S2 mais en ne tenant compte que des pixels qui appartiennent à des zones de l'image considérées comme non véritables dans la carte de véracité. Si S1 est supérieur à TH1, S2 inférieur à TH1' et S3 supérieur une valeur de seuil TH1'', alors l'identification est invalidée et une alarme peut être déclenchée.

Si S1 est supérieur à TH1, S2 inférieur à TH1' et S3 inférieur à TH1", alors la validation ou l'invalidation de l'identification est effectuée suivant un niveau de sécurité nécessaire au système. Par exemple, l'identification est validée dans le cas d'un contrôle d'accès de sécurité standard et invalidée dans le cas d'un contrôle d'une zone de haute sécurité ou d'un contrôle en vue du paiement d'une somme élevée. Dans un mode de réalisation, TH1" est égal à TH1. Dans une variante, TH1 " est légèrement inférieur à TH1. Par exemple, TH1''= $\beta$*TH1 avec $\beta$=0.98.

Dans le cas du visage, un nouveau vecteur de descripteurs est calculé pour l'image obtenue à l'étape S20 en ne tenant compte que des pixels qui appartiennent à des zones de l'image considérées comme véritables dans la carte de véracité. Ce nouveau vecteur est comparé à celui du groupe de données biométriques de référence de la même manière qu'à l'étape S240. Un nouveau score de correspondance S2 est ainsi obtenu. Si ce nouveau score de correspondance S2 est supérieur à une valeur de seuil TH2' alors l'identification est validée (S26-1), sinon l'identification est invalidée (S26-2). Dans ce dernier cas, une alarme (e.g. un signal visuel ou sonore) peut être déclenchée (e.g. émission d'un signal visuel ou sonore) pour indiquer une tentative de fraude. Dans un mode de réalisation, TH2' est égal à TH2. Dans une variante, TH2' est légèrement inférieur à TH2. Par exemple, TH2'= $\alpha$*TH2 avec $\alpha$=0.95.

Dans une variante de réalisation, un nouveau score de correspondance S3 est obtenu de la même manière que le score S2 mais en ne tenant compte que des pixels qui appartiennent à des zones de l'image considérées comme non véritables dans la carte de véracité. Si S1 est supérieur à TH2, S2 inférieur à TH2' et S3 supérieur une valeur de seuil TH2'', alors l'identification est invalidée et une alarme peut être déclenchée.

Si S1 est supérieur à TH2, S2 inférieur à TH2' et S3 inférieur à TH2'', alors la validation ou l'invalidation de l'identification est effectuée suivant un niveau de sécurité nécessaire au système. Par exemple, l'identification est validée dans le cas d'un contrôle d'accès de sécurité standard et invalidée dans le cas d'un contrôle d'une zone de haute sécurité ou d'un contrôle en vue du paiement d'une somme élevée. Dans un mode de réalisation, TH2'' est égal à TH2. Dans une variante, TH2'' est légèrement inférieur à TH2. Par exemple, TH2''= $\beta$*TH2 avec $\beta$=0.98.

Dans le cas d'un iris, les mêmes transformations géométriques appliquées pour obtenir les codes binaires sont appliquées à la carte de véracité afin d'obtenir une valeur de véracité pour chaque code binaire. Seuls les codes binaires ayant une valeur de véracité supérieure à un seuil, e.g. 0.5, sont pris en compte dans le calcul du nouveau score S2 de correspondance. Si ce nouveau score S2 est supérieur à une valeur de seuil TH3' alors l'identification est validée (S26-1), sinon l'identification est invalidée (S26-2). Dans ce dernier cas, une alarme (e.g. un signal visuel ou sonore) peut être déclenchée (e.g. émission d'un signal visuel ou sonore) pour indiquer une tentative de fraude. Dans un mode de réalisation, TH3' est égal à TH3. Dans une variante, TH3' est légèrement inférieur à TH3. Par exemple, TH3'= $\alpha$*TH3 avec $\alpha$=0.95.

Dans une variante de réalisation, un nouveau score de correspondance S3 est obtenu de la même manière que le score S2 mais en ne tenant compte que des pixels qui appartiennent à des zones de l'image considérées comme non véritables dans la carte de véracité. Si S1 est supérieur à TH3, S2 inférieur à TH3' et S3 supérieur une valeur de seuil TH3", alors l'identification est invalidée et une alarme peut être déclenchée.

Si S1 est supérieur à TH3, S2 inférieur à TH3' et S3 inférieur à TH3'', alors la validation ou l'invalidation de l'identification est effectuée suivant un niveau de sécurité nécessaire au système. Par exemple, l'identification est validée dans le cas d'un contrôle d'accès de sécurité standard et invalidée dans le cas d'un contrôle d'une zone de haute sécurité ou d'un contrôle en vue du paiement d'une somme élevée. Dans un mode de réalisation, TH3" est égal à TH3. Dans une variante, TH3" est légèrement inférieur à TH3. Par exemple, TH3''= $\beta$*TH3 avec $\beta$=0.98.

Dans un deuxième mode de réalisation, un nouveau score de mise en correspondance S4 est calculé de la même manière qu'à l'étape S242 en tenant compte de toutes données mais en les pondérant avec la valeur qui leur est associée dans la carte de véracité. Par exemple, dans le cas d'une empreinte digitale, le score est calculé en donnant une importance plus grande aux points (e.g. minuties) qui appartiennent à des zones corporelles véritables. Le score associé à chaque minutie est, par exemple, pondéré par une fonction croissante, e.g. une sigmoïde, en fonction de la probabilité d'être véritable.

Par exemple, $S4 = \frac{1}{NbMin} * \sum_{n=1}^{NbMin} ScCoor(n) * \frac{ProbVrai(n)}{ProbaNeutre}$ où NbMin est le nombre de minuties, ScCoor(n) est un score local de correspondance calculé pour une minutie donnée d'indice n, ProbaVrai(n) est la probabilité que la minutie d'indice n'appartienne à une zone véritable et ProbaNeutre est par exemple égal à 0.6.

Si ce nouveau score est supérieur à une valeur de seuil (e.g. TH1) alors l'identification est validée (S26-1), sinon l'identification est invalidée (S26-2) et le cas échéant une alarme (e.g. un signal visuel ou sonore) est déclenchée (e.g. émission d'un signal visuel ou sonore) pour indiquer une tentative de fraude.

Dans un troisième mode de réalisation, deux nouveaux scores sont calculés : un qui ne tient compte que des données considérées comme véritables et un qui ne tient compte que des données considérées comme non véritables. Si ces deux scores sont très différents, e.g. la valeur absolue de leur différence est supérieure à un seuil, alors l'identification est invalidée. Dans le cas où la carte de véracité est ternaire, les pixels incertains ne sont pas pris en compte ou sont pris en compte pour les deux comparaisons. Ce mode de réalisation est préférentiellement utilisé quand les surfaces marquées comme véritables et comme non véritables ont une taille minimale, e.g. quand au moins 20% de la surface totale est considérée comme véritable et au moins 20% de la surface totale est considérée comme non véritable.

Par exemple, dans le cas du visage, un premier vecteur de descripteurs est calculé en ne tenant compte que des pixels qui appartiennent à des zones de l'image considérées comme véritables dans la carte de véracité. Un second vecteur de descripteurs est calculé en ne tenant compte que des pixels qui appartiennent à des zones de l'image considérées comme non véritables dans la carte de véracité. Les deux vecteurs de descripteurs sont alors comparés entre eux. S'ils sont très différents, e.g. un produit scalaire entre les deux vecteurs est supérieur à un seuil, alors l'identification est invalidée (S26-2), sinon elle est validée (S26-1). Si l'identification est invalidée, une alarme (e.g. un signal visuel ou sonore) peut être déclenchée (e.g. émission d'un signal visuel ou sonore) pour indiquer une tentative de fraude.

Dans un quatrième mode de réalisation, dans le cas d'une mise en correspondance à partir d'éléments locaux, e.g. mise en correspondance de points de type minuties, le nombre de points considérés comme véritables, e.g. appartenant à des patchs véritables, mis en correspondance est déterminé. Si ce nombre est supérieur à un seuil, alors l'identification est validée sinon elle est invalidée. Dans ce dernier cas, une alarme (e.g. un signal visuel ou sonore) peut être déclenchée (e.g. émission d'un signal visuel ou sonore) pour indiquer une tentative de fraude.

Dans une variante de réalisation, à chaque fois qu'un nouveau groupe de données biométriques de référence est stocké dans une base de données, la carte de véracité associée est également stockée. Le score de mise en correspondance est pondéré par le produit des valeurs de véracité associées aux éléments mis en correspondance. Ainsi, les associations entre deux données véritables sont considérées comme véritables alors que les associations dans lesquelles au moins une des deux données est considérée comme non véritable sont considérées comme non véritables.

Dans autre mode de réalisation, les étapes S240 et S244 sont effectuées en une seule et même étape. Ainsi, la carte de véracité est utilisée lors de l'étape S240 pour pondérer le calcul du score de mise en correspondance.

Le procédé décrit est robuste face aux tentatives de fraude. En effet, les informations relatives à la véracité étant prises en compte dans le calcul du score de mise en correspondance (« matching » en anglais) soit dès le départ soit dans un second temps, les tentatives de fraude sont détectées. Le procédé permet avantageusement d'identifier un individu même dans le cas où la partie corporelle utilisée présente des dégradations. En effet, les procédés traditionnels robustes faces aux fraudes vont avoir tendance à invalider l'identification dans le cas d'une partie corporelle présentant des dégradations alors que le présent procédé tout en restant robuste faces aux fraudes validera l'identification dans le cas d'une partie corporelle présentant des dégradations grâce à la partie corporelle identifiée comme véritable dans la carte de véracité.

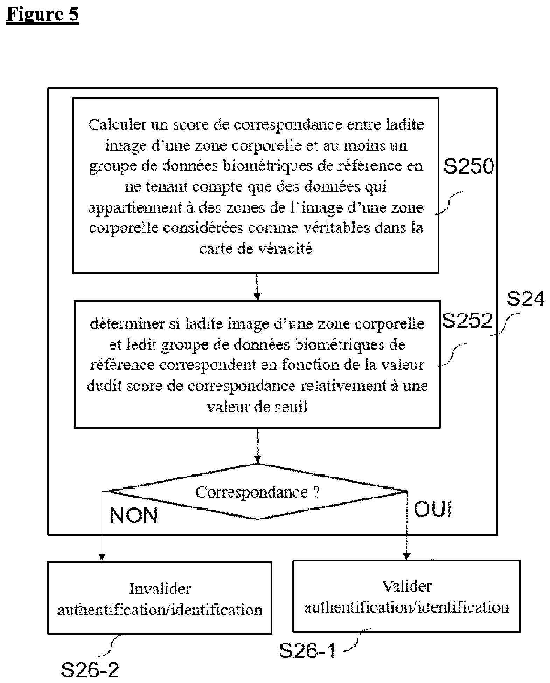

La Fig. 5 illustre en détail l'étape S24 du procédé de validation selon un autre mode de réalisation particulier.

Lors d'une étape S250, un score de correspondance entre l'image de la zone corporelle obtenue à l'étape S20 et au moins un groupe de données biométriques de référence courant est calculé en ne tenant compte que des données qui appartiennent à des zones de l'image d'une zone corporelle considérées comme véritables dans la carte de véracité. De ce score de correspondance, on déduit si l'image de la zone corporelle obtenue à l'étape S20 correspond ou non au groupe de données biométriques de référence courant.

Ainsi, lors d'une étape S252, le procédé détermine si ladite image d'une zone corporelle et le groupe de données biométriques de référence correspondent en fonction de la valeur dudit score de correspondance relativement à une valeur de seuil.

Les étapes S250 et S252 dépendent de la partie corporelle considérée. Les différents modes de réalisation décrits en lien avec la Fig. 4 pour les étapes S240 et S244 s'appliquent, la seule différence étant que lors de l'étape S250, seules les données qui appartiennent à des zones de l'image d'une zone corporelle considérées comme véritables dans la carte de véracité sont prises en compte.

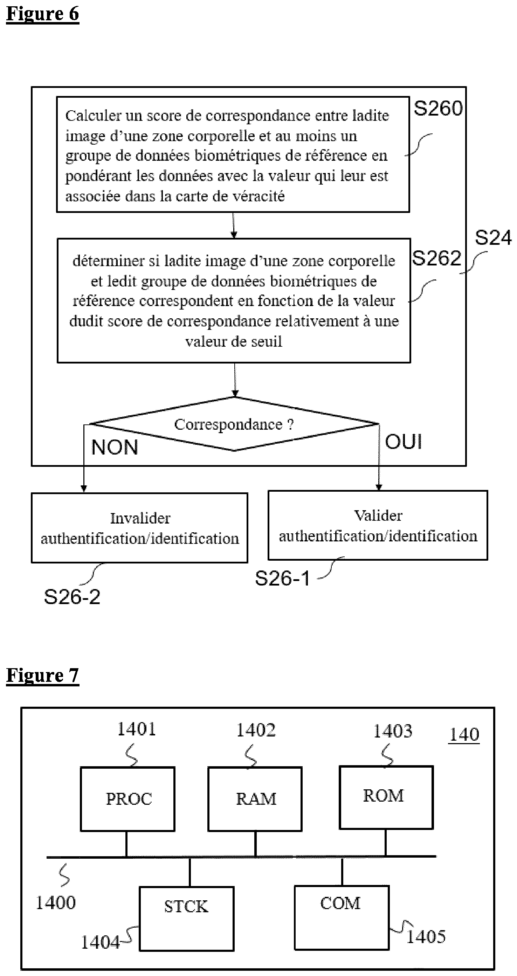

La Fig. 6 illustre en détail l'étape S24 du procédé de validation selon un autre mode de réalisation particulier.

Lors d'une étape S260, un score de correspondance entre l'image de la zone corporelle obtenue à l'étape S20 et au moins un groupe de données biométriques de référence courant est calculé en pondérant les données avec la valeur qui leur est associée dans la carte de véracité. De ce score de correspondance, on déduit si l'image de la zone corporelle obtenue à l'étape S20 correspond ou non au groupe de données biométriques de référence courant.

Ainsi, lors d'une étape S262, le procédé détermine si ladite image d'une zone corporelle et le groupe de données biométriques de référence correspondent en fonction de la valeur dudit score de correspondance relativement à une valeur de seuil.

Les étapes S260 et S262 dépendent de la partie corporelle considérée. Les différents modes de réalisation décrits en lien avec la Fig. 4 pour les étapes S240 et S244 s'appliquent, la seule différence étant que lors de l'étape S260, les données sont pondérées.

La Fig. 7 illustre schématiquement un exemple d'architecture matérielle d'un dispositif 140 d'identification ou d'authentification selon un mode particulier de réalisation. Selon l'exemple d'architecture matérielle représenté à la Fig. 7, le dispositif 140 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage 1404 telle qu'un disque dur ou telle qu'un lecteur de support de stockage, e.g. un lecteur de cartes SD (« Secure Digital » en anglais) ; au moins une interface de communication 1405 permettant au dispositif 140 d'envoyer ou de recevoir des informations.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif 140 est mis sous tension, le processeur 1401 est capable de lire de la RAM 1402 des instructions et de les exécuter. Ces instructions forment un programme d'ordinateur causant la mise en œuvre, par le processeur 1401, de tout ou partie des procédés décrits en relation avec les Figs. 2 à 6.

Les procédés décrits en relation avec les Figs. 2 à 6 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif 140 comprend de la circuiterie électronique configurée pour mettre en œuvre les procédés décrits en relation avec les Figs. 2 à 6.

## Revendications

1.  Un procédé d'identification ou d'authentification biométrique comprenant:

    - obtenir (S20) une image d'une zone corporelle ;
    - obtenir (S22) une carte de véracité pour ladite zone corporelle, ladite carte de véracité associant, à chaque portion d'un ensemble de portions de ladite image d'une zone corporelle, une valeur égale à une probabilité que ladite portion appartienne à une zone corporelle véritable ;
    - comparer (S24) ladite image d'une zone corporelle avec un groupe de données biométriques de référence en utilisant ladite carte de véracité ;
    - valider ou invalider (S26) l'identification ou l'authentification de ladite zone corporelle en réponse à ladite comparaison ;

    procédé dans lequel comparer (S24) ladite image d'une zone corporelle avec un groupe de données biométriques de référence en utilisant ladite carte de véracité comprend :

    - calculer (S250, S260) un premier score de correspondance entre ladite image d'une zone corporelle et ledit groupe de données biométriques de référence en ne tenant compte que des données qui appartiennent à des zones de l'image d'une zone corporelle considérées comme véritables dans la carte de véracité ou calculer (S260) un deuxième score de correspondance entre ladite image d'une zone corporelle et ledit groupe de données biométriques de référence en pondérant les données avec la valeur qui leur est associée dans la carte de véracité ; et
    - déterminer (S252, S262) si ladite image d'une zone corporelle et ledit groupe de données biométriques de référence correspondent en fonction de la valeur dudit premier score de correspondance relativement à une première valeur de seuil ou en fonction de la valeur dudit deuxième score de correspondance relativement à une deuxième valeur de seuil.

2.  Un procédé d'identification ou d'authentification biométrique comprenant :

    - obtenir (S20) une image d'une zone corporelle ;

- obtenir (S22) une carte de véracité pour ladite zone corporelle, ladite carte de véracité associant, à chaque portion d'un ensemble de portions de ladite image d'une zone corporelle, une valeur égale à une probabilité que ladite portion appartienne à une zone corporelle véritable ;
- comparer (S24) ladite image d'une zone corporelle avec un groupe de données biométriques de référence en utilisant ladite carte de véracité ;
- valider ou invalider (S26) l'identification ou l'authentification de ladite zone corporelle en réponse à ladite comparaison ;

procédé dans lequel comparer (S24) ladite image d'une zone corporelle avec un groupe de données biométriques de référence en utilisant ladite carte de véracité comprend :

- calculer (S240) un troisième score de correspondance entre ladite image d'une zone corporelle et ledit groupe de données biométriques de référence sans utiliser la carte de véracité ;
- déterminer (S242) si ladite image d'une zone corporelle et ledit groupe de données biométriques de référence correspondent en fonction de la valeur dudit troisième score de correspondance relativement à une troisième valeur de seuil ; et
- dans le cas où ladite image d'une zone corporelle correspond audit groupe de données biométriques de référence, vérifier (S244) ladite correspondance en utilisant ladite carte de véracité.

3. Procédé selon la revendication 2, dans lequel vérifier (S244) ladite correspondance en utilisant ladite carte de véracité comprend :

- calculer un quatrième score de correspondance entre ladite image d'une zone corporelle et ledit groupe de données biométriques de référence en ne tenant compte que des données qui appartiennent à des zones de l'image d'une zone corporelle considérées comme véritables dans la carte de véracité ; et
- déterminer si ladite image d'une zone corporelle et ledit groupe de données biométriques de référence correspondent en fonction de la valeur dudit quatrième score de correspondance relativement à une quatrième valeur de seuil.

4. Procédé selon la revendication 2, dans lequel vérifier (S244) ladite correspondance en utilisant ladite carte de véracité comprend :

- calculer un cinquième score de correspondance entre ladite image d'une zone corporelle et ledit groupe de données biométriques de référence en ne tenant compte que des données qui appartiennent à des zones de l'image d'une zone corporelle considérées comme véritables dans la carte de véracité ;
- calculer un sixième score de correspondance entre ladite image d'une zone corporelle et ledit groupe de données biométriques de référence en ne tenant compte que des données qui appartiennent à des zones de l'image d'une zone corporelle considérées comme non véritables dans la carte de véracité ;
- déterminer que ladite image d'une zone corporelle et ledit groupe de données biométriques de référence correspondent dans le cas où la valeur absolue de la différence entre ledit cinquième score et ledit sixième score est inférieure à une cinquième valeur de seuil.

5. Procédé selon la revendication 2, dans lequel vérifier (S244) ladite correspondance en utilisant ladite carte de véracité comprend :

- calculer un septième score de correspondance entre ladite image d'une zone corporelle et ledit groupe de données biométriques de référence en pondérant les données avec la valeur qui leur est associée dans la carte de véracité ;
- déterminer si ladite image d'une zone corporelle et ledit groupe de données biométriques de référence correspondent en fonction de la valeur dudit septième score de correspondance relativement à une sixième valeur de seuil.

6. Procédé selon la revendication 2, dans lequel comparer (S24) ladite image d'une zone corporelle avec un groupe de données biométriques de référence en utilisant ladite carte de véracité comprend une mise en correspondance d'éléments locaux et dans lequel vérifier (S244) ladite correspondance en utilisant ladite carte de véracité comprend :

- déterminer un nombre d'éléments locaux mis en correspondance et considérés comme véritables dans la carte de véracité ; et

- déterminer que ladite image d'une zone corporelle et ledit groupe de données biométriques de référence correspondent dans le cas où ledit nombre est supérieur à une huitième valeur de seuil.

**7.** Un dispositif d'identification ou d'authentification biométrique comprenant au moins un processeur configuré pour mettre en œuvre le procédé selon l'une des revendications 1 à 6.

**8.** Un produit programme d'ordinateur **caractérisé en ce qu'**il comprend des instructions pour mettre en œuvre, par un processeur, le procédé selon l'une quelconque des revendications 1 à 6, lorsque ledit programme est exécuté par ledit processeur.

**9.** Un support de stockage **caractérisé en ce qu'**il stocke un programme d'ordinateur comprenant des instructions pour mettre en œuvre, par un processeur, le procédé selon l'une quelconque des revendications 1 à 6, lorsque ledit programme est exécuté par ledit processeur.

**Patentansprüche**

**1.** Ein Verfahren zur biometrischen Identifizierung oder Authentifizierung, umfassend:

- Erfassen (S20) eines Bildes eines Körperbereichs;
- Erhalten (S22) einer Echtheitskarte für den Körperbereich, wobei die Echtheitskarte jedem Abschnitt einer Menge von Abschnitten des Bildes eines Körperbereichs einen Wert zuordnet, der einer Wahrscheinlichkeit entspricht, dass der Abschnitt zu einem echten Körperbereich gehört;
- Vergleichen (S24) des Bildes eines Körperbereichs mit einer Gruppe von biometrischen Referenzdaten unter Verwendung der Echtheitskarte;
- Validieren oder Invalidieren (S26) der Identifizierung oder Authentifizierung des Körperbereichs als Reaktion auf den Vergleich;

wobei das Vergleichen (S24) des Bildes eines Körperbereichs mit einer Gruppe von biometrischen Referenzdaten unter Verwendung der Echtheitskarte umfasst:

- Berechnen (S250, S260) eines ersten Übereinstimmungswerts zwischen dem Bild eines Körperbereichs und der Gruppe von biometrischen Referenzdaten, wobei nur Daten berücksichtigt werden, die zu Bereichen des Bildes eines Körperbereichs gehören, die in der Echtheitskarte als echt angesehen werden, oder Berechnen (S260) eines zweiten Übereinstimmungswerts zwischen dem Bild eines Körperbereichs und der Gruppe von biometrischen Referenzdaten, indem die Daten mit dem ihnen in der Echtheitskarte zugeordneten Wert gewichtet werden; und
- Bestimmen (S252, S262), ob das Bild eines Körperbereichs und die Gruppe von biometrischen Referenzdaten übereinstimmen, auf der Grundlage des Werts des ersten Übereinstimmungswerts in Bezug auf einen ersten Schwellenwert oder auf der Grundlage des Werts des zweiten Übereinstimmungswerts in Bezug auf einen zweiten Schwellenwert.

**2.** Ein Verfahren zur biometrischen Identifizierung oder Authentifizierung, umfassend:

- Erfassen (S20) eines Bildes eines Körperbereichs;
- Erhalten (S22) einer Echtheitskarte für den Körperbereich, wobei die Echtheitskarte jedem Abschnitt einer Menge von Abschnitten des Bildes eines Körperbereichs einen Wert zuordnet, der einer Wahrscheinlichkeit entspricht, dass der Abschnitt zu einem echten Körperbereich gehört;
- Vergleichen (S24) des Bildes eines Körperbereichs mit einer Gruppe von biometrischen Referenzdaten unter Verwendung der Echtheitskarte;
- Validieren oder Invalidieren (S26) der Identifizierung oder Authentifizierung des Körperbereichs als Reaktion auf den Vergleich;

wobei das Vergleichen (S24) des Bildes eines Körperbereichs mit einer Gruppe von biometrischen Referenzdaten unter Verwendung der Echtheitskarte umfasst:

- Berechnen (S240) eines dritten Übereinstimmungswerts zwischen dem Bild eines Körperbereichs und der Gruppe von biometrischen Referenzdaten ohne Verwendung der Echtheitskarte;

- Bestimmen (S242), ob das Bild eines Körperbereichs und die Gruppe von biometrischen Referenzdaten übereinstimmen, basierend auf dem Wert des dritten Übereinstimmungswerts in Bezug auf einen dritten Schwellenwert; und
- für den Fall, dass das Bild eines Körperbereichs mit der Gruppe von biometrischen Referenzdaten übereinstimmt, Überprüfen (S244) der Übereinstimmung unter Verwendung der Echtheitskarte.

3. Verfahren nach Anspruch 2, wobei das Überprüfen (S244) der Übereinstimmung unter Verwendung der Echtheitskarte umfasst:

- Berechnen eines vierten Übereinstimmungswerts zwischen dem Bild eines Körperbereichs und der Gruppe von biometrischen Referenzdaten, wobei nur Daten berücksichtigt werden, die zu Bereichen des Bildes eines Körperbereichs gehören, die in der Echtheitskarte als echt angesehen werden; und
- Bestimmen, ob das Bild eines Körperbereichs und die Gruppe von biometrischen Referenzdaten übereinstimmen, basierend auf dem Wert des vierten Übereinstimmungswerts in Bezug auf einen vierten Schwellenwert.

4. Verfahren nach Anspruch 2, wobei das Überprüfen (S244) der Übereinstimmung unter Verwendung der Echtheitskarte umfasst:

- Berechnen eines fünften Übereinstimmungswerts zwischen dem Bild eines Körperbereichs und der Gruppe von biometrischen Referenzdaten, wobei nur Daten berücksichtigt werden, die zu Bereichen des Bildes eines Körperbereichs gehören, die in der Echtheitskarte als echt angesehen werden;
- Berechnen eines sechsten Übereinstimmungswerts zwischen dem Bild eines Körperbereichs und der Gruppe von biometrischen Referenzdaten, wobei nur Daten berücksichtigt werden, die zu Bereichen des Bildes eines Körperbereichs gehören, die in der Echtheitskarte als nicht echt angesehen werden; und
- Feststellen, dass das Bild eines Körperbereichs und die Gruppe von biometrischen Referenzdaten übereinstimmen, falls der absolute Wert der Differenz zwischen dem fünften und dem sechsten Wert kleiner als ein fünfter Schwellenwert ist.

5. Verfahren nach Anspruch 2, wobei das Überprüfen (S244) der Übereinstimmung unter Verwendung der Echtheitskarte umfasst:

- Berechnen eines siebten Übereinstimmungswerts zwischen dem Bild eines Körperbereichs und der Gruppe von biometrischen Referenzdaten, indem die Daten mit dem ihnen in der Echtheitskarte zugeordneten Wert gewichtet werden; und
- Bestimmen, ob das Bild eines Körperbereichs und die Gruppe von biometrischen Referenzdaten übereinstimmen, basierend auf dem Wert des siebten Übereinstimmungswerts in Bezug auf einen sechsten Schwellenwert.

6. Verfahren nach Anspruch 2, wobei das Vergleichen (S24) des Bildes eines Körperbereichs mit einer Gruppe von biometrischen Referenzdaten unter Verwendung der Echtheitskarte einen Abgleich lokaler Merkmale umfasst und wobei das Überprüfen (S244) der Übereinstimmung unter Verwendung der Echtheitskarte umfasst:

- Bestimmen einer Zahl lokaler Merkmale, die abgeglichen und in der Echtheitskarte als echt angesehen werden; und
- Feststellen, dass das Bild eines Körperbereichs und die Gruppe von biometrischen Referenzdaten übereinstimmen, falls diese Zahl größer als ein achter Schwellenwert ist.

7. Eine biometrische Identifizierungs- oder Authentifizierungsvorrichtung, die mindestens einen Prozessor umfasst, der so konfiguriert ist, das Verfahren gemäß einem der Ansprüche 1 bis 6 auszuführen.

8. Ein Computerprogrammprodukt, **dadurch gekennzeichnet, dass** es Anweisungen umfasst, um durch einen Prozessor das Verfahren gemäß einem der Ansprüche 1 bis 6 zu implementieren, wenn das Programm von dem Prozessor ausgeführt wird.

9. Ein Speichermedium, **dadurch gekennzeichnet, dass** es ein Computerprogramm speichert, das Anweisungen umfasst, um durch einen Prozessor das Verfahren gemäß einem der Ansprüche 1 bis 6 zu implementieren, wenn das Programm von dem Prozessor ausgeführt wird.

**EP 4 099 200 B1**

**Claims**

1. A biometric identification or authentication method comprising:

   - obtaining (S20) an image of a body area;
   - obtaining (S22) a veracity map for said body area, the veracity map associating, with each portion of a set of portions of said image of a body area, a value equal to a probability that said portion belongs to a true body area;
   - comparing (S24) said image of a body area with a group of reference biometric data using said veracity map;
   - validating or invalidating (S26) the identification or authentication of said body area in response to said comparison;

   wherein comparing (S24) said image of a body area with a group of reference biometric data using said veracity map comprises:

   - calculating (S250, S260) a first matching score between said image of a body area and said group of reference biometric data by taking into account only data that belong to areas of the image of a body area considered to be true in the veracity map, or calculating (S260) a second matching score between said image of a body area and said group of reference biometric data by weighting the data with the value associated therewith in the veracity map; and
   - determining (S252, S262) whether said image of a body area and said group of reference biometric data match based on the value of said first matching score relative to a first threshold value or based on the value of said second matching score relative to a second threshold value.

2. A biometric identification or authentication method comprising:

   - obtaining (S20) an image of a body area;
   - obtaining (S22) a veracity map for said body area, the veracity map associating, with each portion of a set of portions of said image of a body area, a value equal to a probability that said portion belongs to a true body area;
   - comparing (S24) said image of a body area with a group of reference biometric data using said veracity map;
   - validating or invalidating (S26) the identification or authentication of said body area in response to said comparison;

   wherein comparing (S24) said image of a body area with a group of reference biometric data using said veracity map comprises:

   - calculating (S240) a third matching score between said image of a body area and said group of reference biometric data without using the veracity map;
   - determining (S242) whether said image of a body area and said group of reference biometric data correspond based on the value of said third matching score relative to a third threshold value; and
   - in the event that said image of a body area corresponds to said group of reference biometric data, verifying (S244) said correspondence using said veracity map.

3. The method according to claim 2, wherein verifying (S244) said correspondence using said veracity map comprises:

   - calculating a fourth matching score between said image of a body area and said group of reference biometric data by taking into account only data that belong to areas of the image of a body area considered to be true in the veracity map; and
   - determining whether said image of a body area and said group of reference biometric data correspond based on the value of said fourth matching score relative to a fourth threshold value.

4. The method according to claim 2, wherein verifying (S244) said correspondence using said veracity map comprises:

   - calculating a fifth matching score between said image of a body area and said group of reference biometric data by taking into account only data that belong to areas of the image of a body area considered to be true in the veracity map;
   - calculating a sixth matching score between said image of a body area and said group of reference biometric data by taking into account only data that belong to areas of the image of a body area considered to be non-genuine in the veracity map; and

14

- determining that said image of a body area and said group of reference biometric data correspond in the event that the absolute value of the difference between said fifth score and said sixth score is less than a fifth threshold value.

5. The method according to claim 2, wherein verifying (S244) said correspondence using said veracity map comprises:

- calculating a seventh matching score between said image of a body area and said group of reference biometric data by weighting the data with the value associated therewith in the veracity map; and
- determining whether said image of a body area and said group of reference biometric data correspond based on the value of said seventh matching score relative to a sixth threshold value.

6. The method according to claim 2, wherein comparing (S24) said image of a body area with a group of reference biometric data using said veracity map comprises matching local features, and wherein verifying (S244) said correspondence using said veracity map comprises:

- determining a number of local features matched and considered to be true in the veracity map; and
- determining that said image of a body area and said group of reference biometric data correspond in the event that said number is greater than an eighth threshold value.

7. A biometric identification or authentication device comprising at least one processor configured to implement the method according to any one of claims 1 to 6.

8. A computer program product **characterised in that** it comprises instructions for implementing, by a processor, the method according to any one of claims 1 to 6, when said program is executed by said processor.

9. A storage medium **characterised in that** it stores a computer program comprising instructions for implementing, by a processor, the method according to any one of claims 1 to 6, when said program is executed by said processor.

## Figure 1

## Figure 2

**Figure 3**

S22

Extraction de minuties — S220

Extraction d'un patch autour de chacune des minuties — S222

Alignement des patchs et extraction de sous-patchs — S224

CNN — S226

Score de véracité par patch

**Figure 4**

Calculer un score de correspondance entre l'image de la zone corporelle obtenue et au moins un groupe de données biométriques de référence sans utiliser la carte de véracité — S240

NON

Correspondance ? — S242

OUI — S244

S24

Vérifier la correspondance à partir de la carte de véracité

Vérification OK ?

NON    OUI

Invalider authentification/identification

Valider authentification/identification

S26-2    S26-1

**Figure 5**

Calculer un score de correspondance entre ladite image d'une zone corporelle et au moins un groupe de données biométriques de référence en ne tenant compte que des données qui appartiennent à des zones de l'image d'une zone corporelle considérées comme véritables dans la carte de véracité — S250

déterminer si ladite image d'une zone corporelle et ledit groupe de données biométriques de référence correspondent en fonction de la valeur dudit score de correspondance relativement à une valeur de seuil — S252

S24

Correspondance ?

NON | OUI

Invalider authentification/identification

Valider authentification/identification

S26-2

S26-1

## Figure 6

Calculer un score de correspondance entre ladite image d'une zone corporelle et au moins un groupe de données biométriques de référence en pondérant les données avec la valeur qui leur est associée dans la carte de véracité — S260

déterminer si ladite image d'une zone corporelle et ledit groupe de données biométriques de référence correspondent en fonction de la valeur dudit score de correspondance relativement à une valeur de seuil — S262 — S24

Correspondance ?

NON — OUI

Invalider authentification/identification

Valider authentification/identification

S26-2 — S26-1

## Figure 7

1401    1402    1403    140

PROC    RAM    ROM

1400

STCK    COM

1404    1405

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20190251380 A1
- EP 3287943 A1
- US 2016070967 A1
- WO 2014198847 A
- FR 3053500
- FR 3037422

**Littérature non-brevet citée dans la description**

- **CHUGH et al.** Fingerprint spoof buster : Use of minutiae-centered patches. *IEEE Transaction on information Forensics and security*, 2018
- **DEB et al.** Look Locally Infer Globally: A Generalizable Face Anti-Spoofing Approach. *IEEE Transactions on Information Forensics and Security*, 2020, vol. 16, 1143-1157